# EUROPEAN PATENT SPECIFICATION

(11) **EP 1 129 881 B1**
(45) Date of publication and mention of the grant of the patent: **24.11.2004**
(21) Application number: 01104897.2
(22) Date of filing: 28.02.2001
(51) Int. Cl.: B60K 15/04, B60K 15/05

(54) **Device for filling fuel for road vehicles**
Vorrichtung zum Betanken von Strassenfahrzeugen
Dispositif pour le remplissage de carburant de véhicules routiers

(30) Priority: 03.03.2000 IT TO000206
(43) Date of publication of application: 05.09.2001
(73) Proprietor: FIAT AUTO S.p.A., 10135 Torino (IT)
(72) Inventor: Zannino, Roberto, 21042 Caronno Pertusella (IT)
(74) Representative: Cerbaro, Elena, Dr.

(56) References cited:
- WO-A-98/45183
- US-A- 5 501 607

## Description

The present invention relates to a device for filling the fuel for road vehicles.

Road vehicles, in particular motor vehicles, to which the following description refers specifically, without however detracting from general applicability, are provided with a tank, which can be supplied with fuel from the exterior, via a filling device which comprises a filler, which opens inside a tank, which is integral with the body of the vehicle. The tank is normally provided with a cover, which can be displaced between a closed position and an open position, and accommodates a cap, which is pivoted on the filler, such as to rotate by being sprung, between a position of opening and a position of closure of the filler.

The devices of the above-described type for filling fuel normally have the disadvantage that the cap for closure of the filler can continue to be disposed in its position of opening, even when the cover of the tank is closed. Consequently, an incorrect manoeuvre by the person carrying out the filling can give rise to uncontrolled leakage of the fuel from the filler whilst the motor vehicle is in motion, or worse still, to intake of foreign bodies into the tank.

A device not having this disadvantage is known from US 5 501 607 A, which discloses all features of the preamble of claim 1.

The object of the present invention is to provide an alternative and improved device for filling fuel.

According to the present invention, a device for filling the fuel for road vehicles according to claim 1 is provided.

The invention will now be described with reference to the attached drawings, which illustrate a nonlimiting embodiment, in which:

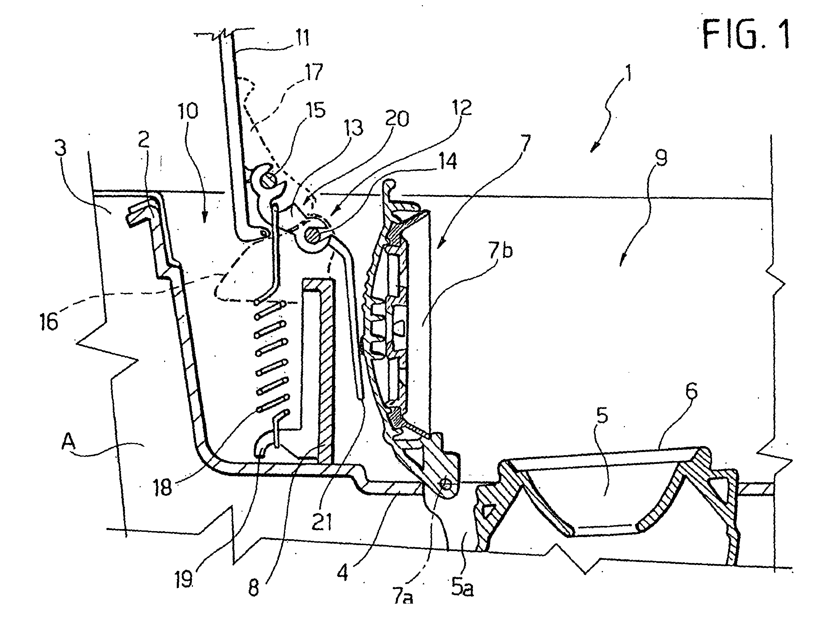

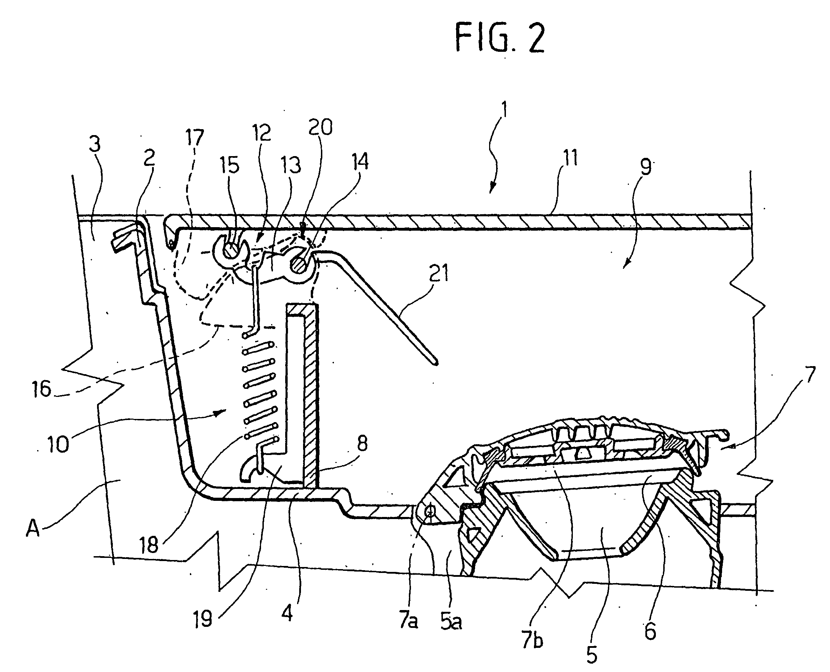

- figures 1 and 2 illustrate schematically in cross-section a preferred embodiment of the filling device according to the invention, in two different operating positions.

In the attached figures, 1 indicates as a whole a device for filling fuel in a motor vehicle A.

The device 1 comprises a tank 2 of a known type, which is integral with a body 3 of the motor vehicle A, and has a substantially parallelepiped shape. The tank 2 has a base wall 4, through which there pass a filler 5 and a bracket 5a, which is integral with the filler 5 itself, an annular end mouth 6 of which opens inside the tank 2 itself.

Inside the tank 2, there is fitted a cap 7, which is pivoted in a known manner on the bracket 5a of the filler 5, in order to rotate by being sprung relative to the tank 2, around a fixed shaft 7a, which, in the particular example described, extends parallel to the base wall 4 itself, between a position of opening (Figure 1), in which the cap 7 itself is disposed in a position substantially at right-angles to the base wall 4, and a position of closure (Figure 2), in which an annular gasket 7b of the cap 7 co-operates in keeping the annular end mouth 6 of the filler 5 sealed against dust and water from the exterior. In other words, the cap 7 is produced, in a manner which is known and is not shown, such that, as far as its rotation around the shaft 7a is concerned, it acts as a bistable mechanical unit, wherein the two positions of opening and closure are two positions of stable balance, and displacement from one of these two positions towards the other gives rise, at a certain point, to passing beyond a dead centre, and to subsequent springing towards the other position of stable balance. There passes through the tank 2 a dividing baffle 8, which extends parallel to the shaft 7a, from the base wall 4, in a direction at right-angles to the base wall 4 itself, and subdivides the tank 2 into two compartments 9 and 10, which communicate with one another above the free end of the baffle 8, opposite that which is connected to the base wall 4, and the compartment 9 of which accommodates both the cap 7 and the mouth 6 of the filler 5. In particular, when it is in its position of opening, the cap 7 is disposed in a position which is adjacent and substantially parallel to the baffle 8.

The tank 2 is provided with a cover 11, which is parallel to the shaft 7a, and is connected to the tank 2 itself by means of a coupling 12, which is articulated such that it can be displaced, relative to the tank 2, between an open position (Figure 1), which is substantially at right-angles to the base wall 4, and a closed position (Figure 2), which is substantially parallel to, and facing the base wall 4. When it is disposed in its open position, the cover 11 permits access to the cap 7 from the exterior.

The articulated coupling 12 is a known coupling, which comprises a crank 13, which is connected in a rotary manner, firstly to the tank 2, by means of a fixed pin 14 which is parallel to the shaft 7a, and faces the free end of the baffle 8, and secondly to a pin 15, which is integral with an intermediate portion of the cover 11, and is mobile together with the cover 11 itself. The articulated coupling 12 also comprises a fixed cam 16, which is integral with the tank 2, has a profile in the shape of a cam, through which the crank 13 passes, and constitutes the base of a base-roller coupling, in which the roller is defined by a cam-shaped profile, through which the crank 13 also passes, of a cam 17 which is supported by the cover 11, and is mobile together with the cover 11 itself. Finally, the articulated coupling 12 comprises a spring 18, which is stretched between a hook 19, which is disposed inside the compartment 10, and is integral with the baffle 8, and an intermediate point of the crank 13, in order to keep the two cams 16 and 17 constantly in contact with one another.

Owing to its configuration, the articulated coupling 12 allows the door 11 to rotate between the aforementioned closed and open positions, by rotating simultaneously around the pins 14 and 15, with a law of displacement which is determined by the shape of the cams 16 and 17, and is always in a direction opposite the direction of rotation of the crank 13 around the pin 14.

The crank 13 constitutes the first arm of a rocker arm 20, which is pivoted on the pin 14, and comprises a further arm 21, which is integral with the crank 13, extends inside the compartment 9, and rotates together with the crank 13 around the pin 14, along a path of displacement, which has a section in common with a path of displacement of the cap 7, between its positions of opening and closure.

In particular, when the cover 11 is disposed in its open position, and the cap 7 is disposed in its position of opening, the arm 21 is disposed (Figure 1) parallel to the baffle 8, and at right-angles to the base wall 4, between the baffle 8 itself and the cap 7, i.e. immediately upstream from the path of displacement of the cap 7, from its position of opening to its position of closure. Displacement of the cover 11 towards its closed position gives rise to opposite rotation of the arm 21 around the pin 14, with consequent displacement of the arm 21 along the said common section, in a direction which is compatible with that of displacement of the said cap 7 towards its position of closure. The arm 21 thus constitutes a thrust element, which, when the cover 11 is closed, and in the case in which the cap 7 is disposed in its position of opening, can engage the cap 7 itself, and thrust it towards its position of closure, towards which the cap 7 will spring, as soon as it has passed its aforementioned dead centre.

According to a variant, not shown, the shaft 7a is inclined by an angle other than zero, relative to the pins 14 and 15 and to the base wall 4.

It is apparent from the foregoing that the presence of the arm 21 permits automatic closure of the cap 7, when the cover 11 is closed.

## Claims

1. Device (1) for filling fuel for road vehicles, the device (1) for filling comprising a tank (2), a cover (11), which is fitted on the tank (2), and is mobile relative to the tank (2) itself, between an open position and a closed position, a filler (5), for filling fuel which flows into the tank (2), a cap (7), which is accommodated inside the tank (2), and is rendered mobile by being sprung, between a position of opening and a position of closure of the filler (5), and a thrust element (21), which is mobile together with the cover (11), in order to engage the said cap (7), and make it spring towards its position of closure, when the cover (11) itself is displaced towards its closed position; the said cover (11) being connected to the tank (2) by means of an articulated coupling (12); the device (1) being **characterised in that** the said articulated coupling (12) comprises a first and a second cam (16,17), which have profiles in the shape of a cam which are in contact with one another, the said cams (16,17) being interposed between the said cover (11) and tank (2), and being integral, one with the said cover (11) and the other with the said tank (2); and a crank (13), which extends through the said cam-shaped profiles, the crank (13) being connected to the said tank (2), in order to rotate relative to the tank (2) itself around a first shaft (14), and being connected to the said cover (11), in order to rotate relative to the cover (11) itself, around a second shaft (15) which is parallel to the first shaft (14).

2. Device (1) according to claim 1, wherein the said tank (2) comprises a base wall (4), through which the said filler (5) passes; the said cap (7) being pivoted on the said filler (5), such as to rotate around a third shaft (7a), which is parallel to the said first and second shafts (14, 15).

3. Device (1) according to claim 1 or claim 2, and comprising a rocker arm (20) which is pivoted on the said tank (2), such as to rotate, relative to the tank (2) itself, around the said first shaft (14); the said rocker arm (20) comprising a first arm, which comprises the said crank (13), and a second arm (21), which comprises the said thrust element (21).

4. Device (1) according to claim 3, wherein the second arm (21) is shaped such that, when the said cover (11) is in its open position, the arm is disposed in a position which is adjacent and substantially parallel to the said cap (7) in the said position of opening, and outside a path of displacement of the cap (7) itself, between the said positions of opening and closure.

## Patentansprüche

1. Vorrichtung (1) zum Einfüllen von Treibstoff für Straßenfahrzeuge, wobei die Einfüllvorrichtung (1) aufweist: einen Tank (2), eine Abdeckung (11), die an dem Tank (2) angebracht ist, und in Bezug zum Tank (2) selbst zwischen einer offenen und einer geschlossenen Position beweglich ist, einen Einfüllstutzen (5), um Treibstoff einzufüllen, der in den Tank (2) fließt, einen Deckel (7), der innerhalb des Tanks (2) untergebracht ist und durch Federung zwischen einer Öffnungsposition und einer Schließposition des Einfüllstutzens (5) beweglich gemacht ist, und ein Schiebeteil (21), das zusammen mit der Abdeckung (11) beweglich ist, um den Deckel (7) in Eingriff zu nehmen, und ihn in Richtung auf seine Schließposition springen zu lassen, wenn die Abdeckung (11) selbst in ihre Schließposition verlagert wird; wobei die Abdeckung (11) mit dem Tank (2) mittels einer gelenkigen Koppelvorrichtung (12) verbunden ist; wobei die Vorrichtung (1) **dadurch gekennzeichnet ist, dass** die gelenkige Koppelvorrichtung (12) aufweist: eine erste und eine zweite Nocke (16, 17), die Profile in Form einer Nocke haben, die miteinander in Kontakt stehen, wobei die Nocken (16, 17) zwischen der Abdeckung (11) und dem Tank (2) angeordnet sind, und wobei eine mit der Abdeckung (11) und die andere mit dem Tank (2) eine integrale Einheit bilden; und eine Kurbel (13), die sich durch die nockenförmigen Profile erstreckt, wobei die Kurbel (13) an den Tank (2) angeschlossen ist, um in Bezug zu dem Tank (2) selbst um einen ersten Schaft (14) zu drehen, und an die Abdeckung (11) angeschlossen ist, um in Bezug zu der Abdeckung (11) selbst um einen zweiten Schaft (15), der parallel zum ersten Schaft (14) ist, zu drehen.

2. Vorrichtung (1) nach Anspruch 1, wobei der Tank (2) eine Trägerwand (4) aufweist, durch die der Einfüllstutzen (5) hindurchgeht; wobei der Deckel (7) an dem Einfüllstutzen (5) drehbar befestigt ist, so dass er um den dritten Schaft (7a) dreht, der parallel zu dem ersten und dem zweiten Schaft (14, 15) ist.

3. Vorrichtung (1) nach Anspruch 1 oder 2, die einen Schwingarm (20) aufweist, der an dem Tank (2) drehbar befestigt ist, so, dass er in Bezug zu dem Tank (2) selbst um den ersten Schaft (14) dreht; wobei der Schwingarm (20) einen ersten Arm aufweist, der die Kurbel aufweist (13), und einen zweiten Arm (21), der das Schiebeteil (21) aufweist.

4. Vorrichtung (1) nach Anspruch 3, wobei der zweite Arm (21) derartig geformt ist, dass, wenn die Abdeckung in ihrer Öffnungsposition ist, der Arm in einer Position angeordnet ist, die nahe bei und im Wesentlichen parallel zu dem Deckel (7), und außerhalb eines Verlagerungspfad des Deckels (7) selbst zwischen der Öffnungsposition und der Schußposition ist.

## Revendications

1. Dispositif (1) pour le remplissage de carburant de véhicules routiers, le dispositif (1) de remplissage comprenant un réservoir (2), un couvercle (11), qui est ajusté sur le réservoir (2), et est mobile par rapport au réservoir (2) lui-même, entre une position ouverte et une position fermée, un dispositif de remplissage (5), pour remplir par du carburant s'écoulant dans le réservoir (2), un bouchon (7), qui est reçu à l'intérieur du réservoir (2), et est rendu mobile en étant sollicité par ressort, entre une position d'ouverture et une position de fermeture du dispositif de remplissage (5), et un élément de poussée (21), qui est mobile avec le couvercle (11), pour venir en prise avec ledit bouchon (7), et le solliciter par ressort vers sa position de fermeture, lorsque le couvercle (11) lui-même est amené vers sa position fermée ; ledit couvercle (11) étant relié au réservoir (2) au moyen d'un couplage articulé (12) ; le dispositif (1) étant **caractérisé en ce que** ledit couplage articulé (12) comprend une première et une seconde came (16, 17), qui ont des profils en forme de came qui sont mutuellement en contact, lesdites cames (16, 17) étant intercalées entre lesdits couvercle (11) et réservoir (2), et faisant partie intégrante, l'une dudit couvercle (11), et l'autre dudit réservoir (2) ; et un levier coudé (13), se prolongeant à travers lesdits profils en forme de came, le levier coudé (13) étant relié audit réservoir (2), pour tourner par rapport au réservoir (2) lui-même autour d'un premier axe (14), et étant reliée audit couvercle (11), pour tourner par rapport au couvercle (11) lui-même, autour d'un deuxième axe (15) qui est parallèle au premier axe (14).

2. Dispositif (1) selon la revendication 1, dans lequel ledit réservoir (2) comprend une paroi de base (4), traversée par ledit dispositif de remplissage (5) ; ledit bouchon (7) pivotant sur ledit dispositif de remplissage (5), de façon à tourner autour d'un troisième axe (7a), qui est parallèle auxdits premier et deuxième arbres (14, 15) .

3. Dispositif (1) selon la revendication 1 ou la revendication 2, et comprenant un balancier (20) pivotant sur ledit réservoir (2), de façon à tourner par rapport au réservoir (2) lui-même, autour dudit premier axe (14) ; ledit balancier (20) étant constitué d'un premier bras, comprenant ledit levier coudé (13), et d'un second bras (21), comprenant ledit élément de poussée (21).

4. Dispositif (1) selon la revendication 3, dans lequel le second bras (21) est conformé de telle sorte que, lorsque ledit couvercle (11) est dans sa position ouverte, le bras est disposé dans une position qui est adjacente et sensiblement parallèle audit bouchon (7) dans ladite position d'ouverture, et en dehors d'un trajet de déplacement du bouchon (7) lui-même, entre lesdites positions d'ouverture et de fermeture.
